# DEMANDE DE BREVET EUROPEEN

(11) **EP 3 591 150 A2**
(43) Date de publication de la demande: **08.01.2020**
(21) Numéro de dépôt: 19160955.1
(22) Date de dépôt: 06.03.2019
(51) Int. Cl.: E05B 81/00, E05B 81/90, E05B 85/10

(54) **COMMANDE D'OUVERTURE A REMONTAGE MECANIQUE**

(30) Priorité: 16.03.2018 FR 1870301
(71) Demandeur: Akwel Vigo Spain SL, 36213 Vigo Pontevedra (ES)
(72) Inventeur: COUTO MAQUIEIRA, Delmiro Javier, 36157 PONTEVEDRA (ES); DIEZ ESTEVEZ, Alberto, 36419 PONTEVEDRA (ES); CASAL GOMEZ, Javier, 36205 VIGO (ES)

(57) **Abrégé**

La commande (10) comprend un boîtier (12), une poignée (16) montée mobile entre au moins une position affleurante dans laquelle la poignée (16) et une position éjectée dans laquelle la poignée (16) est au moins partiellement sortie du boîtier (12). Selon l'invention, la commande (10) comprend un mécanisme (100) configuré pour être déclenché mécaniquement en réponse à une action d'enfoncement dans le boîtier (12) de la poignée (16), la fin de l'action d'enfoncement étant apte à provoquer le déclenchement du mécanisme (100). En outre, le mécanisme (100) est configuré pour entraîner automatiquement en mouvement la poignée (16) selon tout ou partie d'une course partant d'une position enfoncée de la poignée (16) à la position affleurante en passant par la position éjectée.

## Description

La présente invention concerne une commande d'ouverture pour ouvrant de véhicule automobile. L'invention concerne plus particulièrement mais non exclusivement une commande d'ouverture extérieure qui comprend des moyens de déverrouillage mécanique de secours en cas de défaillance des moyens d'actionnement électrique de la serrure. Cette commande d'ouverture s'applique aussi bien à un déverrouillage avec une serrure conventionnelle ou avec une serrure à actionnement électrique, connue également sous l'expression « serrure électronique » ou encore selon la terminologie anglo-saxonne « electronic latch » ou « e-latch ».

De façon générale, une commande d'ouverture extérieure comprend un support fixe destiné à être monté sur l'ouvrant et une poignée montée mobile sur le support, par exemple montée pivotante sur le support en étant articulée en rotation autour d'un axe.

La commande d'ouverture comprend également un mécanisme de déverrouillage, qui lorsque la poignée est manœuvrée en traction, permet le déverrouillage de la serrure et ainsi l'ouverture de la porte. La serrure comprend de façon classique un pêne solidaire de la porte apte à coopérer avec une gâche solidaire de la carrosserie. Lors de l'ouverture de la porte depuis l'extérieur du véhicule, le pêne est dégagé de la gâche par actionnement de la commande d'ouverture extérieure.

L'invention concerne plus particulièrement une commande d'ouverture à poignée du type « flush », c'est-à-dire que le support sur lequel la poignée est montée mobile forme une cavité apte à recevoir la poignée en configuration rentrée. Dans cette configuration rentrée, la surface extérieure de la poignée affleure la surface extérieure de la paroi extérieure de l'ouvrant. En configuration sortie ou déployée, la poignée sort au moins partiellement de la cavité du support de manière à pouvoir être saisie par un utilisateur du véhicule en vue d'ouvrir la porte. Pour ce faire, l'utilisateur peut déplacer la poignée davantage vers l'extérieur afin de commander la serrure de la porte.

En général, la commande d'ouverture comprend un mécanisme d'éjection électrique de la poignée pour permettre la prise en main de la poignée par l'utilisateur et l'ouverture de l'ouvrant. Le mécanisme d'éjection électrique fonctionne à partir d'une alimentation électrique délivrée par exemple par une batterie du véhicule automobile et peut être commandé électroniquement à distance grâce à une clé, un téléphone portable ou tout autre dispositif autorisant une communication à distance.

Toutefois, en cas de défaillance de cette alimentation électrique, la poignée à éjection électrique n'est pas utilisable et l'utilisateur ne peut pas entrer dans le véhicule. Il est donc nécessaire de disposer d'un mécanisme de secours permettant de déverrouiller la porte du véhicule notamment lorsque la batterie n'a pas suffisamment d'énergie pour que le mécanisme de d'éjection électrique fonctionne.

L'invention a pour but de remédier à ces inconvénients et de proposer une commande d'ouverture compacte, robuste permettant de façon simple de réaliser un déverrouillage de secours mécanique.

A cet effet, l'invention a pour objet une commande d'ouverture d'un ouvrant de véhicule automobile du type comprenant :
- un boîtier destiné à être monté sur l'ouvrant,
- une poignée montée mobile à rotation par rapport au boîtier entre au moins une position affleurante dans laquelle la poignée est logée totalement ou partiellement dans le boîtier et une position éjectée dans laquelle la poignée est au moins partiellement sortie du boîtier,
- un mécanisme configuré pour être déclenché mécaniquement en réponse à au moins une action d'enfoncement dans le boîtier de la poignée, la fin de l'action d'enfoncement étant apte à provoquer le déclenchement du mécanisme,
**caractérisé en ce que** le mécanisme comprend un organe-moteur configuré pour accumuler une énergie mécanique lors de l'action d'enfoncement de la poignée et pour restituer une énergie mécanique d'entraînement en mouvement de la poignée dès la fin de la ou des actions d'enfoncement, pour entraîner automatiquement en mouvement la poignée selon tout ou partie d'une course partant d'une position enfoncée de la poignée à la position affleurante en passant par la position éjectée

Grâce à ce mécanisme à actionnement manuel, il est possible d'éjecter la poignée sans assistance électrique. Par ailleurs, le mécanisme permet une rétraction automatique de la poignée dans sa position affleurante sans l'aide d'aucune assistance électrique.

Une commande d'ouverture peut comprendre l'une ou plusieurs des caractéristiques suivantes.

Dans un mode de réalisation préféré de l'invention, le mécanisme comprend un organe moteur, une chaîne cinématique de remontage mécanique de l'organe moteur et une chaîne cinématique d'entraînement mécanique de la poignée par l'organe moteur.

De préférence, l'organe moteur est configuré pour accumuler une énergie mécanique lors de l'action d'enfoncement de la poignée et pour restituer une énergie mécanique d'entraînement en mouvement de la poignée dès la fin de l'action d'enfoncement.

Par exemple, l'organe moteur comprend un arbre, un tambour et un ressort-moteur logé dans le tambour enroulé en spirale autour de l'arbre de tambour.

Dans le mode de réalisation préféré de l'invention, l'organe-moteur comprend une roue de remontage pourvue d'une denture en périphérie monté solidaire de l'arbre de tambour.

Par exemple, le ressort-moteur comprend une extrémité intérieure à l'enroulement fixée à l'arbre de tambour et une extrémité extérieure fixée au tambour.

Dans un mode de réalisation préféré de l'invention, la chaîne cinématique d'entraînement comprend un arbre d'entraînement en mouvement de la poignée muni d'un excentrique pour transformer un mouvement rotatif de l'arbre en un mouvement alternatif de pivotement de la poignée.

De préférence, l'arbre d'entraînement et l'arbre de tambour comprennent des moyens de liaison en rotation unidirectionnels.

Par exemple, les moyens de liaison unidirectionnels comprennent une came et un élément de blocage mobile entre une position active en saillie liée à la came et une position escamotée non liée à la came.

Dans un mode de réalisation préférée, la came est portée par l'arbre de tambour et l'élément de blocage est monté à l'intérieur d'une cage cylindrique conformé en corps de moyeu réceptrice de l'arbre de tambour.

De préférence, la chaîne cinématique de remontage comprend au moins un moyen de transmission du mouvement d'enfoncement de la poignée à l'organe-moteur.

Dans un mode de réalisation préféré de l'invention, le moyen de transmission est un levier monté pivotant par rapport au boîtier et a une forme de secteur circulaire relié de façon pivotante à une extrémité à un organe de butée d'enfoncement de la poignée et formant à l'autre extrémité un arc de cercle d'engrenage denté.

De préférence, le rapport de transmission du moyen de transmission à la roue de remontage de l'organe-moteur est défini de telle façon que l'enfoncement de la poignée provoque une rotation angulaire de 2π de la roue de remontage.

De préférence, le mécanisme comprend un moyen d'arrêt de la chaîne cinématique d'entraînement pendant l'action d'enfoncement.

Dans un mode de réalisation préféré, le moyen d'arrêt comprend un cliquet de transmission à rappel élastique monté pivotant sur la chaîne cinématique de remontage et un levier de blocage de la chaîne cinématique d'entraînement monté à basculement entre une position d'arrêt et une position de démarrage de la chaîne d'entraînement, le levier présentant un bec ou nez ou doigt apte à s'engager avec le cliquet de transmission en fin d'action d'enfoncement pour permettre le basculement du levier de la position d'arrêt à la position de démarrage de la chaîne cinématique d'entraînement.

Par exemple, la chaîne cinématique de remontage comprend un rouage de transmission unidirectionnel dans le sens poignée vers l'organe moteur, en particulier du type à roue libre.

De préférence, la roue libre comprend un embrayage unidirectionnel comprenant une paire de pignons dentés couplés l'un à l'autre en rotation au moins dans un sens grâce à des éléments d'accouplement respectifs.

Dans un mode de réalisation préféré, la chaîne cinématique d'entraînement comprend un organe d'amortissement configuré pour ralentir la course de la poignée au moins de la position éjectée à la position affleurante.

La commande comprend en outre de préférence un levier de pivotement de la poignée en éjection et/ou rétraction et des moyens d'actionnement électrique du levier de pivotement.

De préférence, le levier a une forme d'étrier à l'intérieur duquel peut être engagée la poignée et comprend au moins une barrette transversale supérieure d'appui sur une paroi d'appui supérieure de la poignée et une barrette transversale inférieure d'appui sur une paroi d'appui inférieure de la poignée et le levier comprend un organe de rappel élastique du levier.

Dans un autre mode de réalisation préféré, un levier de blocage de la chaîne cinématique d'entraînement est monté à basculement entre une position d'arrêt et une position de démarrage de la chaîne, le levier étant apte à basculer en position de démarrage lors du dépassement d'un seuil de couple-ressort prédéfini de remontage de l'organe-moteur.

De préférence, la chaîne cinématique de remontage comprend un organe poussoir à ressort formant butée d'enfoncement de la poignée et configuré pour impulser un mouvement lors du relâchement de la poignée.

Dans un mode de réalisation préféré, le levier de pivotement reste immobile pendant le remontage et l'entraînement mécanique de la poignée par l'organe-moteur.

D'autres caractéristiques et avantages de l'invention apparaîtront à la lumière de la description qui suit, faite en référence aux dessins annexés dans lesquels :
- la figure 1 est une vue en perspective d'une commande d'ouverture selon l'invention ;
- la figure 2 est une vue éclatée en perspective de la commande d'ouverture de la figure 1 ;
- la figure 3 est une vue de dessous en perspective d'un mécanisme actionnable mécaniquement de la commande d'ouverture de la figure 1 ;
- la figure 4 est une vue partielle agrandie de dessus en perspective de la commande d'ouverture ;
- la figure 5 est une vue éclatée d'un mécanisme de secours de la commande d'ouverture de la figure 1 ;
- les figures 6A à 6D représentent des vues en détail d'un organe-moteur de la commande d'ouverture selon l'invention ;
- les figures 7A à 7D représentent des vues en détail d'un rouage de transmission de type à roue libre d'une chaîne cinématique de remontage de la commande d'ouverture selon l'invention :
- les figures 8 et 9 représentent une vue en détail d'un amortisseur rotatif d'une chaîne cinématique d'entraînement de la commande d'ouverture selon l'invention ;
- les figures 10 à 20 illustrent des étapes de fonctionnement de la commande d'ouverture de la figure 1.

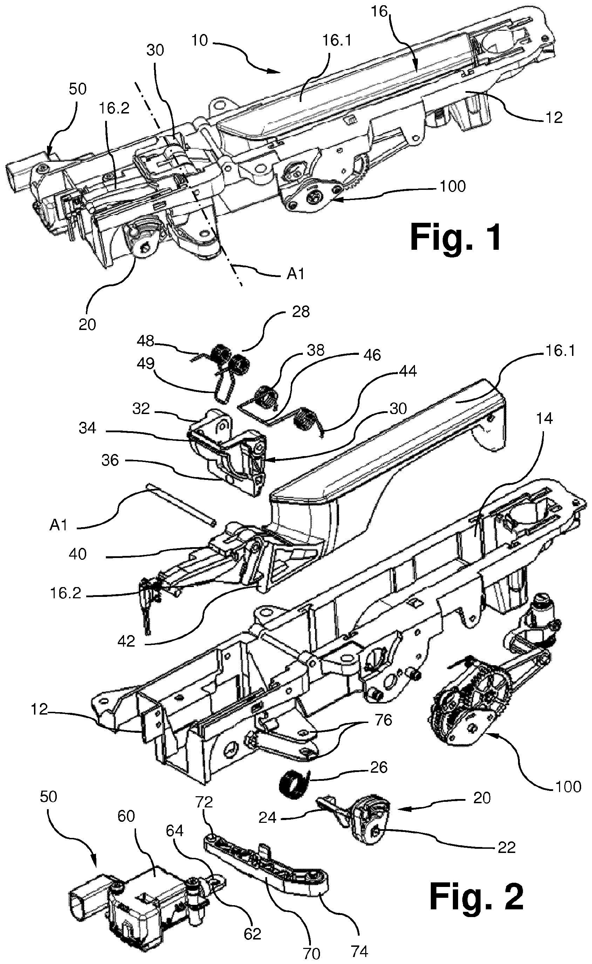

On a représenté de façon schématique sur **la** **figure 1** une commande d'ouverture d'un ouvrant de véhicule automobile selon l'invention. La commande d'ouverture est désignée par la référence générale 10.

La commande d'ouverture 10 est prévue pour être montée sur un panneau extérieur (non représenté) de carrosserie d'un ouvrant qui est par exemple une porte latérale de véhicule.

La commande d'ouverture 10 comporte pour l'essentiel un support fixe ou boîtier 12 présentant une cavité 14 de réception d'une poignée et une poignée 16 montée mobile à l'intérieur de la cavité 14. En service, le support 12 est destiné à être fixé à l'ouvrant. La poignée 16 est dans l'exemple décrit montée articulée par rapport au panneau, autour d'un axe géométrique de pivotement A1, sur le support 12. L'axe de pivotement est en position de service sensiblement vertical et s'étend parallèlement au plan général du panneau extérieur.

Dans l'exemple illustré, le support 12 a une forme générale parallélépipédique et est adapté pour être logé dans une découpe ou un évidement du panneau extérieur de l'ouvrant de telle manière que sa face extérieure affleure la surface du panneau extérieur de l'ouvrant. Le support 12 est par ailleurs ouvert du côté de sa face extérieure et fermé par un fond du côté intérieur afin de délimiter la cavité 14 destinée à loger la poignée 16.

La poignée 16 est représentée en détail sur **la** **figure 2****.** La poignée 16 présente une portion externe 16.1 que l'utilisateur peut saisir. A l'opposé de la portion externe 16.1, la poignée 16 présente une portion interne 16.2 qui est destinée à s'étendre à l'intérieur du logement 14 du boîtier 12 formant support comme cela est visible sur **la** **figure 2****.** De façon classique, sur la portion externe 16.1, la poignée 16 inclut une palette 18 de préhension, laquelle a globalement une forme plate et allongée.

Dans l'exemple décrit, la poignée 16 est du type « flush », c'est-à-dire que le support 12 sur lequel la poignée 16 est montée mobile forme la cavité 14 apte à recevoir la poignée 16 dans une configuration rentrée. Dans cette configuration rentrée, la surface extérieure de la poignée 16 affleure la surface extérieure de la paroi extérieure de l'ouvrant. En configuration sortie ou déployée, la poignée 16 sort au moins partiellement de la cavité 14 du support 12 de manière à pouvoir être saisie par un utilisateur du véhicule en vue d'ouvrir la porte. Pour ce faire, l'utilisateur peut déplacer en traction la poignée 16 davantage vers l'extérieur afin de commander la serrure de la porte. Dans la position affleurante, la surface extérieure de la commande d'ouverture 10 coïncide avec la surface extérieure de l'ouvrant. Cette disposition affleurante ou « flush », connue dans l'automobile, permet de valoriser le style du véhicule et réduit la traînée aérodynamique.

Il est toutefois entendu que d'autres montages mobiles sont envisageables, comme notamment en pivotement suivant un axe situé à une autre position ou encore en translation suivant une direction essentiellement perpendiculaire au plan moyen de la porte. Il est également à noter que le montage mobile de la poignée par rapport au support est connu en soi de l'homme de métier.

La commande d'ouverture 10 est destinée à coopérer avec une serrure (non représentée) de l'ouvrant du véhicule automobile susceptible d'adopter une configuration verrouillée et une configuration déverrouillée. De façon classique, le pivotement de la poignée 16 autour de son axe d'articulation A1 actionne la serrure dans l'une ou l'autre de ses deux configurations verrouillée ou déverrouillée par l'intermédiaire d'une chaîne cinématique d'entraînement (non représentée sur les figures).

A cet effet, comme cela est illustré sur **les** **figures 1 et 2****,** la commande d'ouverture 10 comprend un levier de renvoi 20. Ce levier de renvoi 20 comprend dans l'exemple décrit une cage rotative 22 et un arbre de renvoi 24 ainsi qu'un ressort de renvoi 26 de rappel destiné à être logé à l'intérieur de la cage rotative 22. La cage rotative 22 comprend par exemple un moyen de retenue d'une extrémité d'un câble Bowden (non représenté). L'ensemble 20 est destiné à être monté sur le support 12 comme cela est illustré sur **la** **figure 1****.**

Dans l'exemple illustré sur **la** **figure 2****,** la commande d'ouverture 10 comprend une partie électrique 50 permettant un actionnement électrique de l'éjection et/ou de la rétraction de la poignée 16 et une partie mécanique 100 permettant un actionnement mécanique du mouvement de la poignée 16.

On va maintenant décrire en détail la partie électrique 50. Pour son fonctionnement électrique, comme cela est illustré sur **la** **figure 2****,** la commande d'ouverture 10 comprend de préférence encore un levier 30 de pivotement de la poignée 16. Ce levier de pivotement 30 est monté sur l'axe de pivot A1 de la poignée 16. Ainsi, le levier de pivotement 30 est relié à la poignée 16 par au moins un axe de rotation commun A1.

Ce levier de pivotement 30 a une forme générale d'étrier à travers lequel la portion interne 16.1 de la poignée peut être engagée (**figure 2**).

L'étrier d'éjection 30 présente des première et deuxième joues 32 latérales parallèles et perpendiculaires à l'axe commun de rotation A1. Ces joues 32 sont d'une part reliées entre elles par une barrette transversale supérieure 34 destinée à venir en appui contre une paroi d'appui supérieure 40 de la branche interne 16.2 de la poignée 16 et d'autre part par une barrette transversale inférieure 36 qui est destinée à venir en appui contre une paroi d'appui inférieure 42 de la branche interne 16.2 de la poignée 16.

La commande d'ouverture 10 comprend en outre un organe 38 de rappel relié à l'étrier 30. Cet organe de rappel 38 est configuré pour rappeler l'étrier 30 dans une position de repos correspondant à la configuration affleurante de la poignée 16.

Cet organe de rappel 38 comprend de préférence un ressort d'étrier pourvu de deux pattes extérieures 44 et d'une partie centrale 46. On voit sur **la** **figure 2** que chacune des deux pattes du ressort d'étrier 38 est fixée à une paroi intérieure du boîtier 12.

Dans l'exemple décrit, la poignée 16 est pourvue d'un organe 28 de rappel de poignée 16 qui est placé entre l'étrier 30 et la portion interne 16.1 de la poignée 16 et qui ont pour axe commun l'axe A1.

Le ressort de rappel de poignée 28 présente deux pattes 48 destinées à être fixées à l'étrier 30 et une partie centrale 49 en prise avec la portion interne 16.2. La fonction du ressort de rappel de poignée 28 est de maintenir un contact entre la portion interne 16.2 de la poignée 16 et l'étrier de pivotement 30, par un effort de rappel et ainsi de rattraper un jeu entre la portion interne 16.1 et l'étrier 30.

En outre, la partie de fonctionnement électrique 50 comprend dans cet exemple un actionneur électrique 60 relié à un bras 70 d'éjection destiné à s'étendre transversalement à l'intérieur du boîtier 12 de façon pivotante comme cela est visible **en** **figure 1****.** L'actionneur électrique 60 comprend de préférence un vérin linéaire 62 pourvue d'une extrémité 64 coopérant avec une extrémité 72 du bras d'éjection. Par exemple, l'extrémité 64 comprend une encoche et l'extrémité 72 comprend un ergot en saillie.

Le bras d'éjection 70 est comme cela est illustré en exemple sur **la** **figure 2****,** comprend une extrémité 74 montée pivotante entre deux flasques parallèles 76 du boîtier 12.

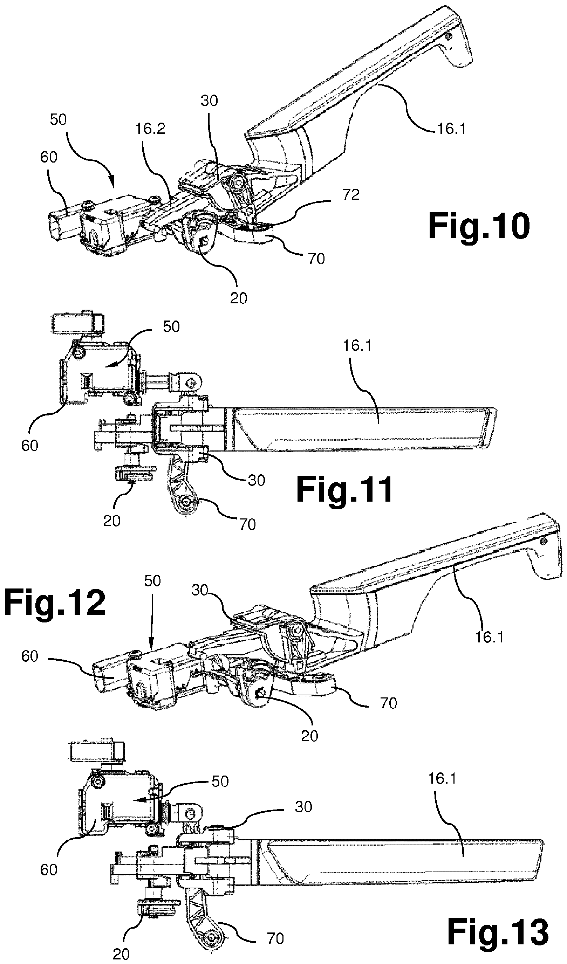

Dans le fonctionnement électrique illustré par **les** **figures 10 à 13****,** l'utilisateur donne par exemple un ordre d'ouverture à un ordinateur de bord du véhicule automobile qui envoie un signal électronique à l'actionneur 60. Cet ordre provoque un déplacement d'un vérin 62 de l'actionneur 60.

Durant la phase d'éjection de la poignée 16, l'actionneur 60 transmet un mouvement par l'intermédiaire du vérin 62 au bras d'éjection 70. Le bras d'éjection 70 est configuré pour entraîner l'étrier 30 à l'encontre de l'effort de rappel du ressort du levier d'éjection 38, par exemple en appuyant contre la barrette transversale 36 de l'étrier 30. L'étrier 30, qui été maintenu en position de repos par son ressort de rappel 38, est déplacé jusqu'à ce que la poignée 16 atteigne sa position d'éjection. Dans cette position d'éjection, l'utilisateur peut tirer la poignée 16, à l'encontre du ressort 28 de poignée 16, et agir sur le levier de renvoi 20 pour actionner le câble de la serrure. En outre, de préférence, le ressort 28 entre la poignée 16 et l'étrier 30 permet de faire revenir la poignée 16 en position éjectée à la fin de l'action de l'utilisateur en accompagnant le déplacement de l'étrier 30.

Durant la phase de rétraction de la poignée 16, l'actionneur 60 est par exemple alimenté avec une polarité opposée et déplace le bras d'éjection 70 dans le sens inverse. Le bras d'éjection 70 accompagne alors de préférence le mouvement de l'étrier 30 dont le ressort de rappel 38 tend à rappeler dans sa position de repos. La poignée 16 accompagne l'étrier 30 par l'action de son ressort de rappel 28.

L'actionneur 60 est donc dans cet exemple bistable.

Dans le cas où le fonctionnement électrique s'avère impossible à cause d'une défaillance, la commande d'ouverture 10 comporte conformément à l'invention un mécanisme de secours 100 doté de préférence d'un accumulateur d'énergie élastique. Pour recharger l'accumulateur d'énergie élastique, il faut enfoncer la poignée 16 vers l'intérieur de la carrosserie. Cette action fait pivoter la poignée 16 autour de son axe A1 en opposition à son ressort de rappel 28. Dans le fonctionnement mécanique, de préférence, l'étrier 30 reste immobile. En effet, dans le fonctionnement mécanique manuel, l'étrier 30 reste dans sa position de repos parce qu'il y a un jeu entre l'étrier 30 et la poignée 16 permettant le mouvement de la poignée 16 sans solliciter l'étrier 30.

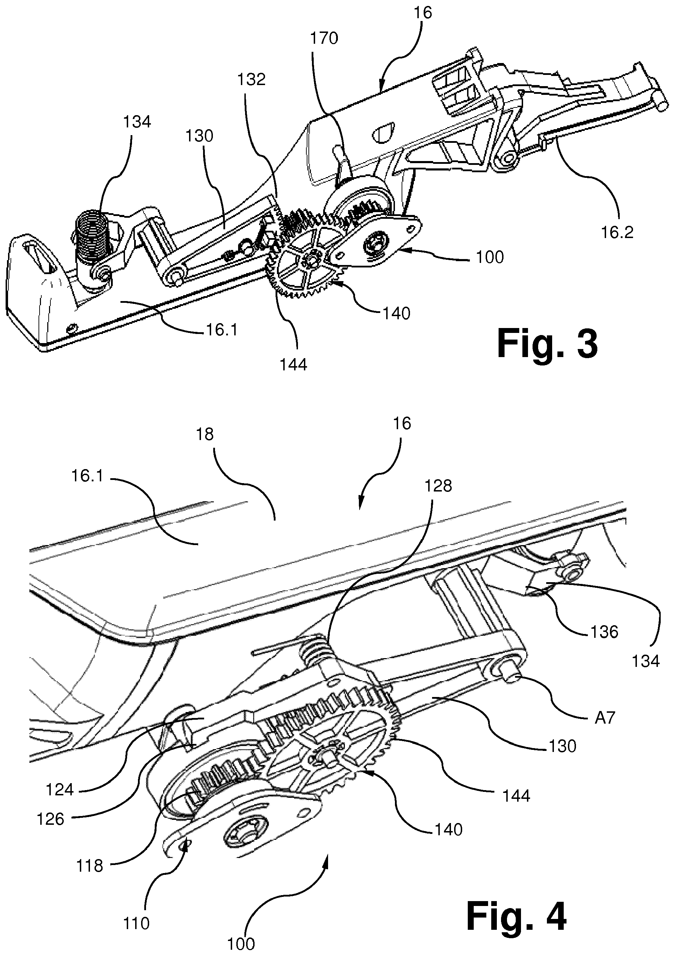

On va maintenant décrire en détail ce mécanisme 100 qui est illustré sur **les** **figures 3 à 9****.**

Conformément à l'invention, le mécanisme 100 est actionnable manuellement par enfoncement de la poignée 16 dans une position enfoncée dans le boîtier 12 et est configuré pour entraîner automatiquement et mécaniquement la poignée 16 en mouvement.

En particulier, le mécanisme 100 est configuré pour être déclenché mécaniquement en réponse à une action d'enfoncement dans le boîtier 12 de la poignée 16, la fin de l'action d'enfoncement étant apte à provoquer le déclenchement du mécanisme 100. Le mécanisme 100 est configuré pour entraîner automatiquement en mouvement la poignée 16 selon tout ou partie d'une course partant d'une position enfoncée de la poignée 16 à la position affleurant en passant par la position éjectée. De préférence, le mécanisme 100 est configuré pour entraîner en mouvement la poignée 16 sur la totalité de la course.

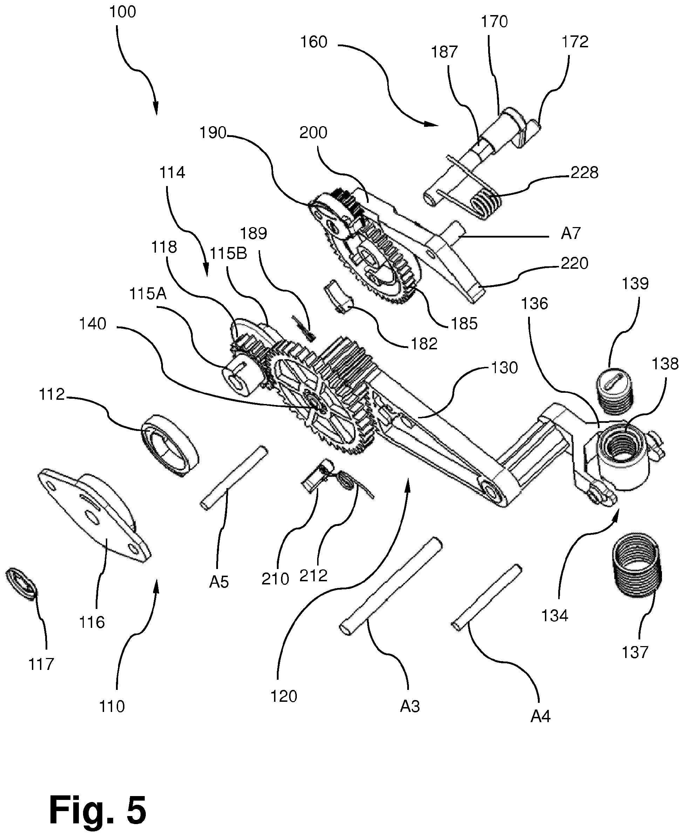

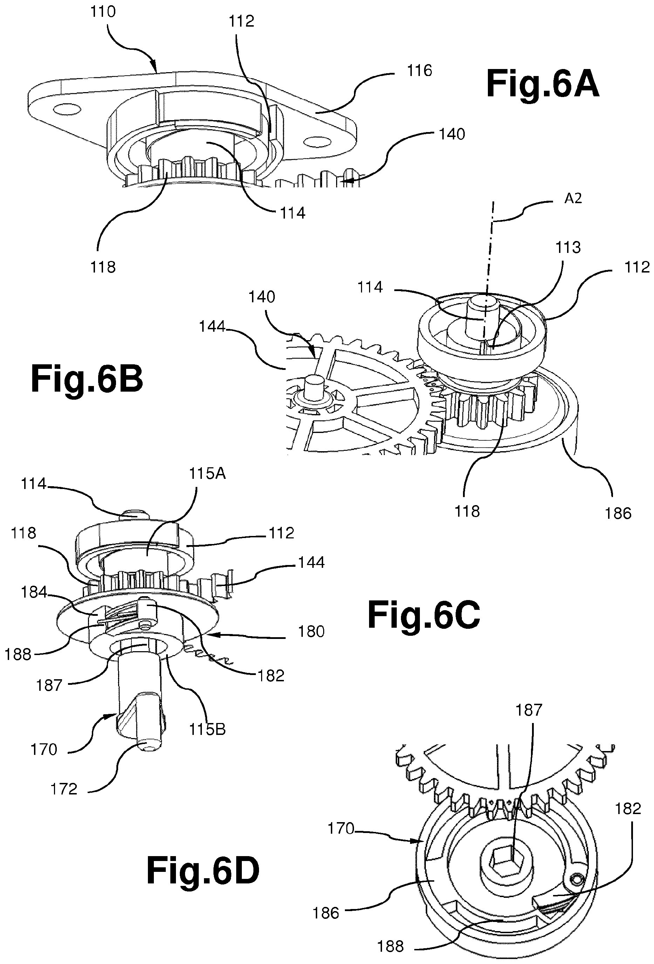

Comme cela est illustré en détail sur **la** **figure 5** **et sur les** **figures 6A à 6D****,** le mécanisme 100 comprend de préférence un organe-moteur 110. L'organe-moteur 110 comprend dans l'exemple décrit un ressort-moteur 112 en forme de spirale, par exemple comportant une lame métallique enroulée sur elle-même. L'organe-moteur 110 comporte un arbre 114 selon un axe A2, un tambour d'enroulement 116 et le ressort-moteur 112 logé dans le tambour 116 enroulé en spirale autour de l'arbre de tambour 114. Dans l'exemple décrit, le tambour 116 est solidaire du support 12. Par exemple, le tambour d'enroulement 116 est fixé par soudage ou vissage à ce support 12.

De préférence, l'organe-moteur 110 comprend encore une roue de remontage 118 pourvue d'une denture d'engrenage périphérique. Dans l'exemple illustré sur **la** **figure 5****,** la roue de remontage 118 est montée solidaire de l'arbre de tambour 114, de préférence dans une portion médiane de l'arbre de tambour 114.

Par ailleurs, le ressort de puissance 112 est placé de façon coaxiale à la roue de remontage 118, qui tourne autour de l'axe A2. Ce ressort-moteur 112 comprend une extrémité extérieure fixée au tambour 116 et une extrémité intérieure fixée à l'arbre de tambour 114. Par exemple, les extrémités extérieure et intérieure du ressort-moteur 112 comprennent chacune un pli configuré pour être reçu à l'intérieur d'une rainure ménagée dans le tambour 116 et dans l'arbre 114. L'arbre 114 comprend par exemple une rainure radiale 113. L'organe-moteur 110 comprend encore dans l'exemple décrit une rondelle de pression 117.

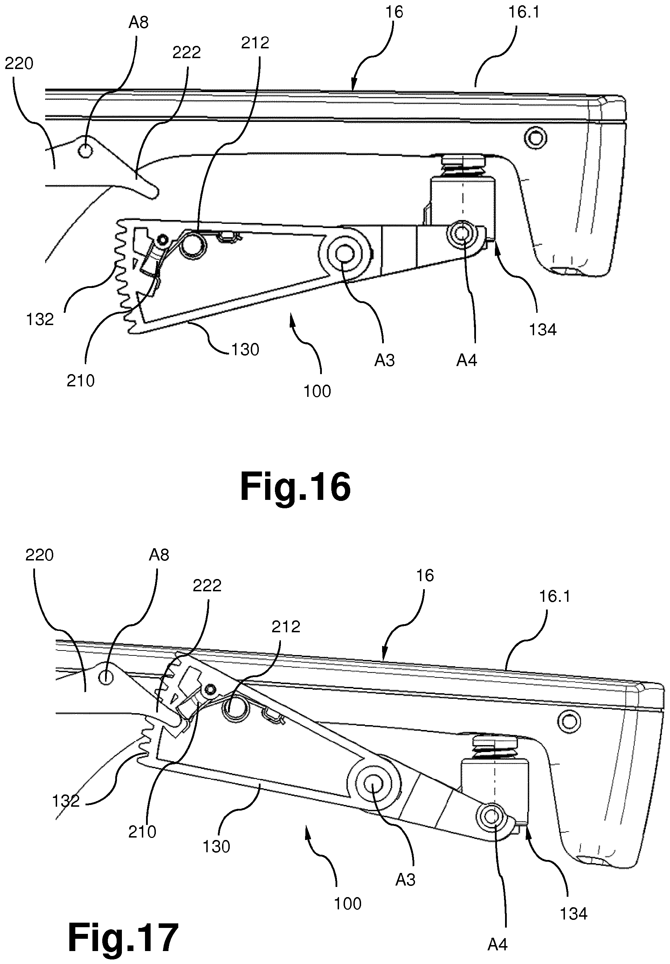

En outre, le mécanisme 100 comprend encore une chaîne cinématique 120 de remontage de l'organe-moteur 110. Cette chaîne cinématique 120 comprend au moins un moyen 130 de transmission du mouvement d'enfoncement de la poignée 16 à l'organe-moteur 110. De préférence, comme cela est visible sur **les** **figures 16 et 17****,** le moyen 130 comprend une portion d'engrenage 132 apte faire tourner directement ou, comme dans l'exemple décrit, indirectement la roue de remontage 118 de l'organe-moteur 110 et est relié également à un organe de butée 134 d'enfoncement de la poignée 16.

En outre, le moyen 130 est de préférence monté pivotant autour d'un axe A3 par rapport au boîtier 12 et a une forme de secteur circulaire relié de façon pivotante à son extrémité centrale à l'organe de butée d'enfoncement 134 de la poignée 16 et formant à l'autre extrémité un arc de cercle d'engrenage denté 132.

A cet effet, de préférence, la chaîne cinématique de remontage 120 comprend un organe poussoir 134 à ressort formant butée d'enfoncement de la poignée 16 et configuré pour impulser un mouvement lors du relâchement de la poignée 16. Le poussoir 134 comprend un manchon 138, une butée élastomérique 139 logée dans le manchon 138 et un ressort de rappel de butée 137. L'extrémité centrale du levier de transmission 130 comprend une fourche 136 à deux bras pour recevoir un axe transversal de pivotement A4 de l'organe de butée 134. L'organe de butée d'enfoncement 134 est destiné à venir en contact avec une face inférieure de la portion externe 16.1 de la poignée 16.

Lors de la phase d'enfoncement de la poignée 16 par un utilisateur, le pivotement de la poignée 16 provoque un déplacement de la butée 134, qui glisse vers l'intérieur à l'encontre de son ressort de rappel 137.

L'extrémité inférieure de la butée 144 est liée en rotation au levier de transmission 130 par l'axe A4, de sorte qu'un déplacement de la butée 134 provoque la rotation du levier de transmission 130 autour de son axe A3.

De préférence, le rapport de démultiplication du moyen de transmission 130 à la roue de remontage 118 de l'organe-moteur 110 est défini de telle façon que l'enfoncement de la poignée 16 provoque une rotation angulaire de 2π de la roue de remontage 118.

En outre, la chaîne cinématique de remontage 120 comprend encore un rouage de transmission 140, intercalé entre le moyen de transmission 130 et l'organe-moteur 110. Ce rouage de transmission 140 a pour fonction principale d'empêcher le fonctionnement de la chaîne de remontage 120 dans le sens opposé au sens poignée 16 vers organe-moteur 110.

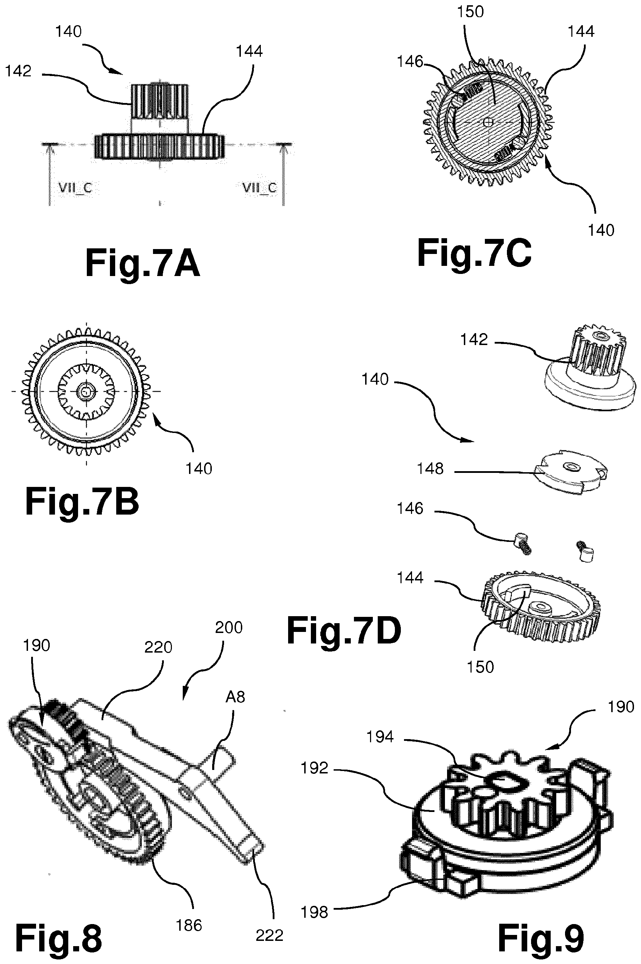

A cet effet, le rouage de transmission 140 est unidirectionnel dans le sens poignée vers l'organe-moteur 110. Par exemple, le rouage de transmission unidirectionnel 140 comprend un jeu d'engrenages de type à roue libre. Comme cela est illustré en détail sur **les** **figures 7A à 7D****,** le jeu d'engrenage 140, désigné également par roue débrayable ou par roue libre comprend un embrayage unidirectionnel agencé pour tourner dans un sens unique.

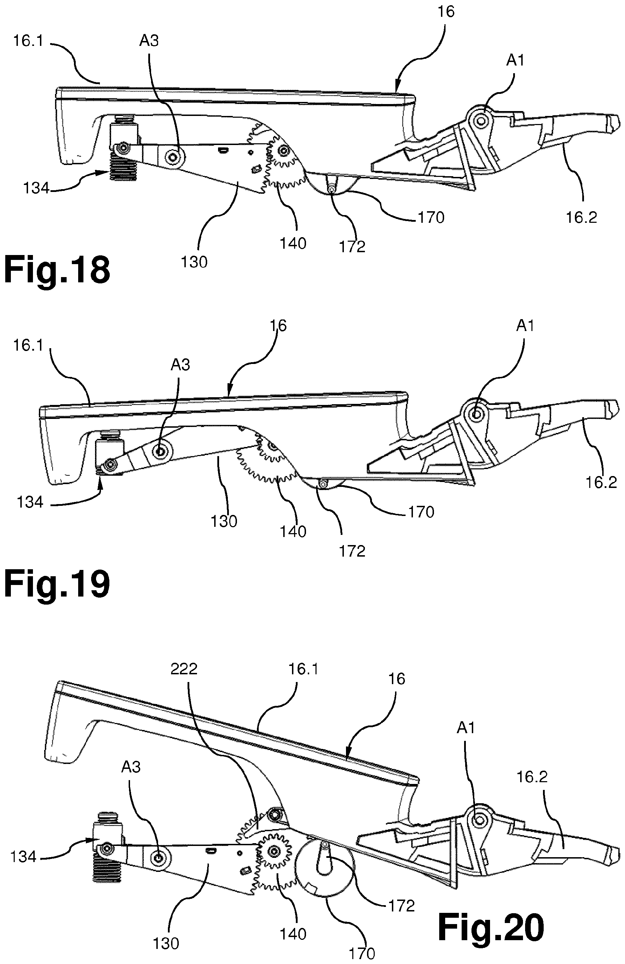

Ce type d'embrayage est bien connu de l'art antérieur. Par exemple, l'ensemble roue débrayable 140 comporte à cet effet une paire de pignons, un pignon d'engrenage d'entrée 142 et un pignon d'engrenage de sortie 144 coopérant à travers une transmission débrayable de sorte qu'il est possible de transmettre un couple de rotation dans un unique sens de rotation (sens de rotation horaire sur **les** **figures 18 à 20**).

En référence **aux** **figures 18 à 20****,** l'embrayage unidirectionnel 140 est capable d'assurer les fonctions suivantes:
- transmettre le couple de l'engrenage d'entrée 142 à l'engrenage de sortie 144, uniquement dans le sens de rotation horaire et par conséquent ne transmettre aucun couple de l'engrenage d'entrée à l'engrenage de sortie, dans un sens de rotation antihoraire,
- ne transmettre aucun couple de l'engrenage de sortie 144 à l'engrenage d'entrée 142, quel que soit le sens de rotation de l'engrenage de sortie 144.

De préférence, les deux pignons 142, 144 sont configurés pour être couplés l'un à l'autre grâce à des éléments d'accouplement respectifs 146, de préférence disposés sur des faces des pignons 142, 144 en regard l'une de l'autre. Les éléments d'accouplement 146 comprennent par exemple deux ou plus de cylindres ou billes, deux ou plus ressorts de rappel des cylindres ou billes, et un tambour 148. Par la suite, on ne décrira un ensemble roue débrayable ne comprenant que deux cylindres.

L'engrenage de sortie 144 délimite un logement pour recevoir partiellement l'engrenage d'entrée 142 de sorte que l'engrenage d'entrée 142 comporte une paroi latérale externe périphérique laquelle glisse contre la paroi latérale interne périphérique du boîtier. L'engrenage de sortie 144 comporte deux cloisons internes 150 en forme de secteur circulaire. Les deux cylindres 146 sont placés dans l'espace restant entre le tambour et les secteurs circulaires. Les cylindres sont compressés contre les secteurs circulaires par deux ressorts.

Comme cela est illustré sur **les** **figures 18 à 20****,** avec une rotation anti-horaire du levier de transmission 130, le pignon d'entrée 142 est entraîné en une rotation horaire lequel entraîne le pignon de sortie 144 solidairement, de sorte que la roue débrayable 140 travaille comme un seul corps tournant autour de son axe A5 dans le sens horaire.

Le pignon de sortie 144 collabore avec la roue de remontage 118 a travers un engrenage. La démultiplication de la transmission de la poignée 16 et la roue de remontage 118 a été conçue de sorte qu'un enfoncement de la poignée 16 par l'utilisateur entraîne une rotation de 360º de la roue de remontage 118.

Le mécanisme 100 comprend encore une chaîne cinématique 160 d'entraînement en mouvement de la poignée 16 par l'organe-moteur 110. Cette chaîne cinématique d'entrainement 160 comprend au moins un arbre d'entraînement 170 muni d'un excentrique 172 pour transformer un mouvement rotatif de l'arbre d'entraînement 170 transmis par l'organe-moteur 110 en un mouvement alternatif de pivotement de la poignée 16.

L'arbre tambour 114 comprend la roue de remontage 118 et une portion terminale d'enroulement 115A du ressort-moteur 112 ainsi qu'une portion terminale d'entraînement 115B destinée à être couplée avec l'arbre d'entraînement 170. Il est bien entendu, que dans l'exemple décrit, le sens de rotation de l'arbre tambour 114 pour remonter le ressort 112 est opposé au sens de rotation de l'arbre tambour 114 pour entraîner l'arbre d'entraînement 170.

Ainsi, de préférence, l'arbre d'entraînement 170 et l'arbre tambour 114 comprennent des moyens 180 de liaison unidirectionnels en rotation de sorte que lors du remontage de l'organe moteur 110, l'arbre tambour 114 n'entraîne pas en rotation l'arbre d'entraînement 170. De ce fait, l'arbre d'entraînement 170 est solidaire en rotation de l'arbre tambour 114 que dans un seul sens de rotation correspondant au sens de distribution d'énergie de l'organe-moteur 110 par opposition au sens de remontage.

De préférence, les moyens de liaison unidirectionnels 180 comprennent une came 184 et un élément de blocage 182 mobile entre une position active en saillie liée à la came 184 et une position escamotée non liée à la came 184.

Par exemple, la came 184 est portée par l'arbre de tambour 114 et l'élément de blocage 182 est monté à l'intérieur d'une cage cylindrique 186 conformé en corps de moyeu réceptrice de l'arbre de tambour 114.

Ainsi, la cage réceptrice cylindrique 186 est conformée en corps de moyeu recevant à l'intérieur la portion terminale d'entraînement 115B de l'arbre tambour 114. Cette cage cylindrique 186 est monté solidaire de l'arbre d'entraînement 170 par une liaison cannelée de type hexagonale 187.

Par exemple, l'élément de blocage 182 est monté mobile à l'intérieur de la cage 186 entre une position active d'interaction en saillie à l'intérieur de la cage 186 et une position inactive escamotée tangentiellement à une paroi interne 188 de la cage 186 et la came 184 de l'arbre de tambour 114 est pourvue d'un profil de came pouvant interagir avec l'élément de blocage 182. L'élément de blocage 182 comprend par exemple un cliquet pivotant rappelé élastiquement dans la position d'interaction en saillie par un ressort 189. Par exemple, le profil de came comprend une rampe d'escamotage munie d'une butée terminale 188 contre laquelle le cliquet rotatif 182 vient en prise.

Le cliquet pivotant 182 de la cage réceptrice 186 permet de transmettre le couple du ressort-moteur de la roue de remontage 118 vers la cage réceptrice 186. Le couple sera transmis une fois que le ressort de puissance 112 est remonté par un tour de la roue de remontage 118. Le cliquet 182 est rappelé contre la came 184 de l'arbre tambour 114 par l'action de son ressort de rappel.

Dans la position affleurante et en fin d'enfoncement de la poignée 16, le cliquet rotatif 182 fait face à la butée de la rampe de la came 184, de sorte que la roue de remontage 118 transmet son couple (couple donné par le ressort de puissance) à l'arbre d'entraînement 170 par l'intermédiaire de la cage réceptrice 186.

En outre, la chaîne cinématique d'entraînement 160 comprend encore un moyen 190 d'amortissement de la course du mouvement de rétraction de la poignée 16 depuis sa position éjectée vers sa position affleurante. Le moyen d'amortissement 190 comprend par exemple un amortisseur rotatif configuré pour engrener avec la cage 186 dans le but de réduire la vitesse du mouvement l'excentrique 172 pendant la phase de rétraction et d'éjection de la poignée 16 par le ressort de puissance 112. A cette fin, la cage 186 est pourvue d'une denture périphérique 185 pour coopérer avec l'amortisseur rotatif 190.

De façon générale, un amortisseur rotatif peut fonctionner dans un seul sens de rotation ou dans les deux sens de rotation. De préférence, dans le cas présent, afin d'éviter un freinage de la poignée par l'amortisseur rotatif 190 lors de son enfoncement, ce dernier est prévu pour fonctionner uniquement dans la phase de rétraction et d'éjection mais pas pendant l'action d'enfoncement.

**La** **figure 9** représente en détail l'amortisseur rotatif 190. De façon connue en soi, l'amortisseur 190 comprend un boîtier 192 et un arbre rotatif 194 monté sur le boîtier 190 de manière à pouvoir tourner autour d'un axe de rotation et des moyens de freinage, par exemple un fluide visqueux ou de la graisse, fonctionnellement interposés à l'intérieur du boîtier 190 ainsi qu'une roue dentée 196. Le boîtier 192 comprend en outre par exemple des moyens de fixation 198.

De préférence, la commande d'ouverture 10 comprend également un moyen 200 de blocage de la chaîne cinématique d'entrainement 160 lors de l'action d'enfoncement. Ainsi, le mécanisme 100 comprend un organe d'arrêt 200 de la transmission de mouvement 160 pendant l'action d'enfoncement.

De préférence, le moyen d'arrêt 200 comprend un cliquet 210 monté pivotant à rappel élastique sur la chaîne cinématique de remontage 120 et un levier de blocage 220 de la chaîne cinématique d'entraînement 160 à basculement entre une position d'arrêt de la chaîne 160 et une position de démarrage, le levier 220 présentant un nez 222 apte à coopérer avec le cliquet de transmission 210 en fin d'action d'enfoncement pour permettre le basculement du levier 220 et le démarrage de la chaîne cinématique d'entraînement 160.

Le levier d'arrêt 220 comprend également à une extrémité opposée à son nez 222 un crochet 224 apte à venir s'engager dans une encoche 226 ménagée dans la cage réceptrice 186. En effet, le levier d'accrochage 220 est monté pivotant autour d'un axe A7 du boîter de la commande 10 et il est rappelé par un ressort de crochet 228 contre la surface périphérique extérieure de la cage réceptrice 186.

Dans ce but, comme cela est illustré en détail sur **la** **figure 4****,** le cliquet 210 est monté pivotant sur le levier de transmission 130 avec un ressort de rappel élastique 212. Le crochet 224 est libéré de l'encoche 226 lorsque l'utilisateur arrête l'enfoncement sur la poignée 16 et lorsque levier de transmission 130 commence à tourner dans un sens opposé au sens d'enfoncement de la poignée 16, sous l'impulsion du ressort de butée 137.

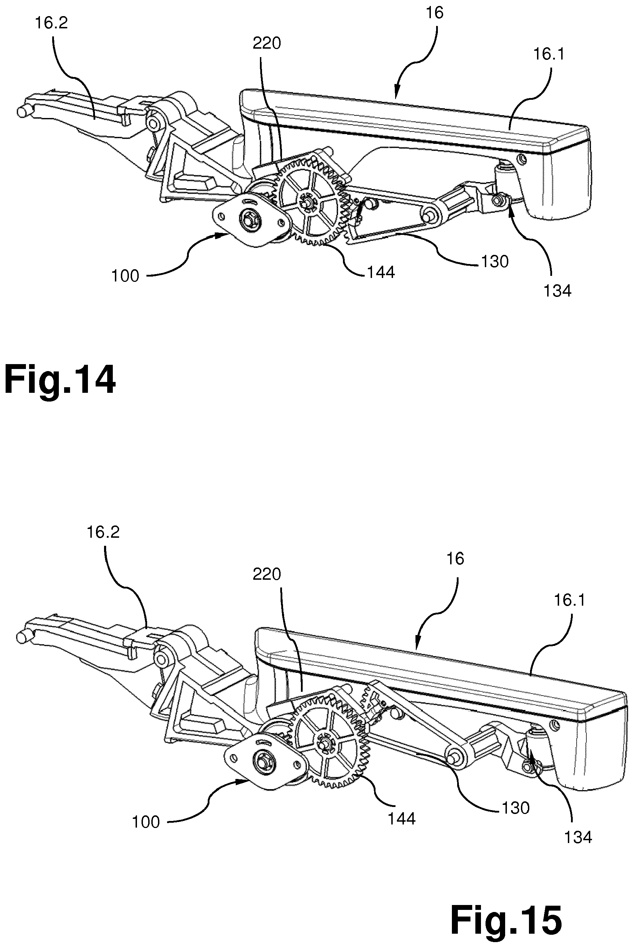

On va maintenant décrire en référence **aux** **figures 10 à 20** les principaux aspects du fonctionnement de la commande d'ouverture selon l'invention. Les figures **10 à 13** illustrent le fonctionnement électrique de la commande d'ouverture 10 et les figures **14 à 20** illustrent son fonctionnement manuel.

Initialement, en mode de fonctionnement électrique, la poignée 16 est en position affleurante (**figures 12 et 13**). Dans cette position, l'étrier 30 est rappelé dans sa position de rappel de telle sorte que l'étrier d'éjection 30 maintient la poignée 16 dans la position affleurante. Le bras d'éjection 70 est en appui contre la branche inférieure 36 du levier et le vérin 62 de l'actionneur 60 est en position rentrée.

Lors d'un ordre émis par l'utilisateur, l'actionneur 60 commande la sortie du vérin 62 entraînant le pivotement du bras d'éjection 70. Ce dernier va pousser contre la branche inférieure 36 de l'étrier d'éjection 30 à l'encontre de l'effort de rappel exercé par le ressort de rappel 38 pour accompagner l'éjection de la poignée 16.

En mode de fonctionnement manuel, la poignée 16 est initialement dans une position affleurante. Cette position est illustrée par exemple par **les** **figures 14****,** **16** **et** **18****.**

L'utilisateur enfonce la poignée 16 de sorte que cette dernière sollicite en compression la butée élastomérique 134 formant organe d'enfoncement. L'enfoncement axial de l'organe poussoir 134 enclenche la chaîne cinématique de remontage.

Ainsi, le levier de transmission pivote (**figure 19**) autour de son axe dans un sens anti-horaire en entraînant la roue libre en configuration embrayée 140 dans un sens horaire ainsi que la roue de remontage 118 dans un sens anti-horaire. Le rapport de démultiplication est choisi pour que l'enfoncement de la poignée 16 provoque un tour complet de la roue de remontage 118.

Dès le relâchement de la poignée 16, la roue libre 140 se place en configuration débrayée et la rotation horaire du levier de transmission 130 (**figure 20**), induite par le ressort de rappel de la butée 144, ne transmet pas de couple à la roue de remontage 118.

En outre, le pivotement du levier de transmission 130 pendant l'enfoncement de la poignée 16 permet le rapprochement du cliquet de transmission vers le bec du crochet. Le cliquet de transmission 210 franchit le bec 222 et passe par-dessus le bec 222 du levier de crochet 220 provoquant alors un basculement du crochet 220 et rendant ainsi possible sa libération de la cage réceptrice 186. Pendant l'enfoncement de la poignée 16, le cliquet du levier de transmission 210 se replie (escamote) au contact avec l'extrémité du crochet 224, sans provoquer aucun effet sur le crochet 224. Par contre, cette action positionne le cliquet du levier de transmission 220 dans l'autre coté du crochet 210. De cette manière, quand l'utilisateur arrête l'enfoncement de la poignée 16 et la lâche, le cliquet du levier de transmission 210 frappera le crochet 224 et le libérera.

Une fois que le crochet 224 est libéré, la chaîne cinématique d'entraînement 160 démarre et l'arbre d'entraînement 170 tourne librement, entraîné par le ressort de puissance 112.

L'excentrique 172 de l'arbre d'entraînement 170 fait un tour complet. Dans le premier demi-tour, l'excentrique 172 impulsera la poignée 16 vers le haut. Dans le deuxième demi-tour, l'excentrique 172 fera retourner la poignée 16 à sa position initiale.

Bien entendu, l'invention ne se limite pas aux modes de réalisation précédemment décrits. D'autres modes de réalisation à la portée de l'homme du métier peuvent aussi être envisagés sans sortir du cadre de l'invention définie par les revendications ci-après.

Par exemple, il est possible de remonter l'organe-moteur avec plusieurs actions d'enfoncement successives de la poignée. Dans ce cas, la came 184 pourra comprendra plusieurs dents/parois de blocage 388.

En plus, la libération de l'arbre excentrique 172 serait réalisée au moment d'atteindre un couple ressort prédéfinie de sorte que l'organe d'arrêt 200 serait formé uniquement par le levier 220. Le levier 220 devra avoir par exemple en extrémité un crochet en forme de V pour permettre sa libération au moment d'atteindre un couple prédéfini du ressort-moteur.

## Revendications

1. Commande (10) d'ouverture d'un ouvrant de véhicule automobile du type comprenant :
- un boîtier (12) destiné à être monté sur l'ouvrant,
- une poignée (16) montée mobile à rotation par rapport au boîtier (16) entre au moins une position affleurante dans laquelle la poignée (16) est logée totalement ou partiellement dans le boîtier (12) et une position éjectée dans laquelle la poignée (16) est au moins partiellement sortie du boîtier (12),
- un mécanisme (100) configuré pour être déclenché mécaniquement en réponse à au moins une action d'enfoncement dans le boîtier (12) de la poignée (16), la fin de l'action d'enfoncement étant apte à provoquer le déclenchement du mécanisme (100)
**caractérisé en ce que** le mécanisme (100) comprend un organe-moteur (110) configuré pour accumuler une énergie mécanique lors de l'action d'enfoncement de la poignée (16) et pour restituer une énergie mécanique d'entraînement en mouvement de la poignée (16) dès la fin de la ou des actions d'enfoncement, pour entraîner automatiquement en mouvement la poignée (16) selon tout ou partie d'une course partant d'une position enfoncée de la poignée (16) à la position affleurante en passant par la position éjectée

2. Commande (10) selon la revendication précédente, dans lequel l'organe-moteur (110) comprend un arbre (114), un tambour (116) et un ressort-moteur (112) logé dans le tambour (116) et enroulé en spirale autour de l'arbre de tambour (114).

3. Commande (10) selon la revendication précédente, dans lequel l'organe-moteur (110) comprend une roue (118) de remontage pourvue d'une denture en périphérie monté solidaire de l'arbre de tambour (114).

4. Commande (10) selon la revendication 2 ou 3, dans lequel le ressort-moteur (112) comprend une extrémité intérieure à l'enroulement fixée à l'arbre de tambour (114) et une extrémité extérieure fixée au tambour (116).

5. Commande (10) selon l'une quelconque des revendications précédentes, dans lequel le mécanisme (100) comprend une chaîne cinématique (120) de remontage mécanique de l'organe-moteur (110) et une chaîne cinématique (160) d'entraînement mécanique de la poignée (16) par l'organe-moteur (110).

6. Commande (10) selon la revendication précédente, dans lequel la chaîne cinématique d'entraînement (160) comprend un arbre (170) d'entraînement en mouvement de la poignée (16) muni d'un excentrique (172) pour transformer un mouvement rotatif de l'arbre (170) en un mouvement alternatif de pivotement de la poignée (16).

7. Commande (10) selon la revendication précédente prise ensemble avec l'une quelconque des revendications 2 à 4, dans lequel l'arbre d'entraînement (170) et l'arbre de tambour (114) comprennent des moyens (180) de liaison en rotation unidirectionnels.

8. Commande (10) selon la revendication précédente, dans lequel les moyens de liaison unidirectionnels (180) comprennent une came (184) pourvue d'au moins une paroi de came (188) et un élément (182) de blocage mobile entre une position active en saillie en prise avec la paroi de came (188) et une position escamotée non en prise avec la came (184).

9. Commande (10) selon la revendication précédente, dans lequel la came (184) est portée par l'arbre de tambour (114) et l'élément de blocage (182) est monté à l'intérieur d'une cage cylindrique (186) conformé en corps de moyeu réceptrice de l'arbre de tambour (114).

10. Commande (10) selon l'une quelconque des revendications 5 à 9, dans lequel la chaîne cinématique de remontage (120) comprend un organe poussoir (134) à ressort formant butée d'enfoncement de la poignée (16) et configuré pour impulser un mouvement lors du relâchement de la poignée (16).

11. Commande (10) selon l'une quelconque des revendications 5 à 10, dans lequel la chaîne cinématique de remontage (120) comprend au moins un moyen (130) de transmission du mouvement d'enfoncement de la poignée (16) à l'organe-moteur (110).

12. Commande (10) selon la revendication précédente, dans lequel le moyen de transmission (130) est un levier (130) monté pivotant par rapport au boîtier (12) et a une forme de secteur circulaire relié de façon pivotante à une extrémité à un organe (134) de butée d'enfoncement de la poignée (16) et formant à l'autre extrémité un arc de cercle d'engrenage denté (132).

13. Commande (10) selon la revendication 11 ou 12, dans lequel le rapport de transmission du moyen de transmission (130) à l'organe-moteur (110) est défini de telle façon que l'enfoncement de la poignée (16) provoque une rotation angulaire de 2π d'une roue de remontage (118) de l'organe-moteur (110).

14. Commande (10) selon l'une quelconque des revendications 5 à 13, dans lequel le mécanisme (100) comprend un moyen (200) de blocage de la chaîne cinématique d'entraînement (160) pendant l'action d'enfoncement.

15. Commande (10) selon la revendication précédente, dans lequel le moyen de blocage (200) comprend un cliquet (210) de transmission à rappel élastique monté pivotant sur la chaîne cinématique de remontage (120) et un levier (220) de blocage de la chaîne cinématique d'entraînement (160) monté à basculement entre une position d'arrêt et une position de démarrage de la chaîne d'entraînement (160), le levier (220) présentant un nez (222) apte à coopérer avec le cliquet de transmission (210) lors du relâchement de la poignée pour permettre le basculement du levier (220) de la position d'arrêt à la position de démarrage de la chaîne cinématique d'entraînement (160).

16. Commande selon la revendication 14, dans lequel le moyen de blocage comprend un levier de blocage de la chaîne cinématique d'entraînement (160) monté à basculement entre une position d'arrêt et une position de démarrage de la chaîne (160), le levier étant apte à basculer en position de démarrage lors du dépassement d'un seuil de couple-ressort prédéfini de remontage de l'organe-moteur (110).

17. Commande selon l'une quelconque des revendications 5 à 16, dans lequel la chaîne cinématique de remontage (120) comprend un rouage de transmission unidirectionnel (140) dans le sens poignée (16) vers organe-moteur (110), en particulier du type à roue libre.

18. Commande (10) selon la revendication précédente, dans lequel la roue libre (140) comprend un embrayage unidirectionnel comprenant une paire de pignons dentés (142, 144) couplés l'un à l'autre en rotation au moins dans un sens grâce à des éléments d'accouplement respectifs (146).

19. Commande selon l'une quelconque des revendications 5 à 18, dans lequel la chaîne cinématique d'entraînement (160) comprend un organe d'amortissement (190) configuré pour ralentir la course de la poignée (16) au moins de la position éjectée à la position affleurante.

20. Commande (10) selon l'une quelconque des revendications précédentes, comprenant un levier (30) de pivotement de la poignée (16) en éjection et/ou rétraction et des moyens (60) d'actionnement électrique du levier de pivotement (16).

21. Commande (10) selon la revendication précédente, dans lequel le levier (30) a une forme d'étrier à l'intérieur duquel peut être engagée la poignée (16) et comprend au moins une barrette transversale supérieure (34) d'appui sur une paroi d'appui supérieure de la poignée (16) et une barrette transversale inférieure d'appui (36) sur une paroi d'appui inférieure de la poignée (16) et le levier (30) comprend un organe (38) de rappel élastique du levier (30).

22. Commande (10) selon la revendication 20 ou 21 prise ensemble avec l'une quelconque des revendications précédentes, dans lequel le levier de pivotement (30) reste immobile pendant le remontage et l'entraînement mécanique de la poignée (16) par l'organe-moteur (110).
